# EUROPEAN PATENT SPECIFICATION

(11) **EP 2 312 414 B1**
(45) Date of publication and mention of the grant of the patent: **27.03.2013**
(21) Application number: 10166732.7
(22) Date of filing: 22.06.2010
(51) Int. Cl.: G05D 16/10, F16K 17/10

(54) **Pressure control valve**
Druckregelventil
Vanne de contrôle de la pression

(30) Priority: 08.10.2009 KR 20090095424
(43) Date of publication of application: 20.04.2011
(73) Proprietor: Volvo Construction Equipment Holding Sweden AB, 631 85 Eskilstuna (SE)
(72) Inventor: Jeon, Man Seuk, 641-777, Gyeongsangnam-do (KR)
(74) Representative: Zimmermann, Tankred Klaus

(56) References cited:
- EP-A2- 1 975 481
- EP-A2- 2 093 467

## Description

### BACKGROUND OF THE INVENTION

### Field of the invention

The present invention relates to a pressure control valve that can control a set pressure of a valve by signal pressure supplied from the outside.

More particularly, the present invention relates to a pressure control valve that can variably control the set pressure of a pressure control valve through manipulation of a signal pressure generation device in an operator's seat or the like.

### Description of the Prior Art

In general, a relief valve is used within a set pressure of a hydraulic circuit. In the case of taking away a bucket from an excavator and replacing the bucket with an option device such as a hammer or the like, it is required to reset the set pressure of the relief valve. In order to change the set pressure of the relief valve, an operator should set the pressure of the relief valve as the operator directly confirms a pressure gauge on the outside of a cab, and this causes the operator inconvenience.

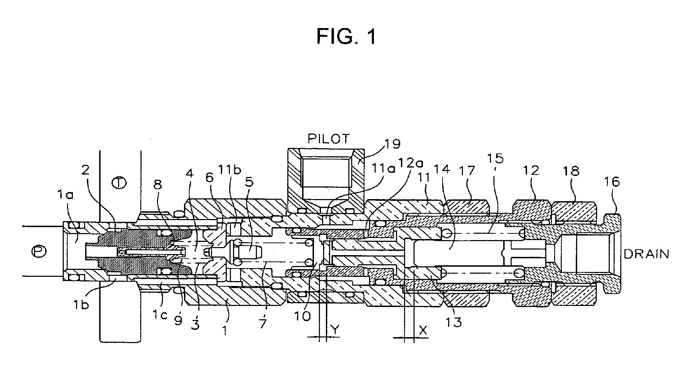

As illustrated in FIG. 1, a pressure control valve in the related art includes a sleeve 1 having an inlet port 1a into which high-pressure hydraulic fluid from a hydraulic pump P flows, and a through hole 1b formed thereon to communicate with a hydraulic tank T; a poppet 2 slidably coupled in the sleeve 1 to open/close a flow path between the inlet port 1a and the through hole 1b; a poppet spring 3 elastically supporting the path between the inlet port 1a and the through hole 1b in a closed state by pressing the poppet 2; a pilot poppet 5 draining the hydraulic fluid in a pressure chamber 4 to the hydraulic tank T when high pressure that exceeds the set pressure is generated in the pressure chamber 4 of the sleeve 1; a valve seat 6 on which the pilot poppet 5 is seated to form pressure in the pressure chamber 4; a pilot poppet spring 7 elastically supporting a flow path of the valve seat 6 in a closed state by pressing the pilot poppet 5; a piston 8 sliding inside the poppet 2 by an initial pressure of the hydraulic pump to be in contact with the pilot poppet 5; a piston spring 9 elastically supporting the piston 8; a first stopper 10 facing the pilot poppet 5 and supporting the pilot poppet spring 7; a plug 11 coupled to the sleeve 1, and having a pilot port 11a formed thereon to receive the pilot signal pressure supplied from the outside; a guide 12 coupled to the plug 11, and having a through-hole 12a formed thereon to receive a supply of the pilot signal pressure; a main piston 13 sliding inside the guide 12 to variably adjust the set pressure of the pressure chamber 4 in accordance with the pilot signal pressure supplied through the pilot port 11a and the through-hole 12a; a second stopper 14 limiting the movement of the main piston 13 within a predetermined section when the pilot signal pressure which passes through the pilot port 11a and the through hole 12a in order presses the main piston 13; an adjustment plug 16 movably coupled to the guide 12 to adjust the set pressure of a spring 15 elastically supporting the main piston 62; and a fastening part 17 fixed to the guide 12 to prevent forward or backward rotation of the guide 12 and a fastening part 18 fixed to the adjustment plug 16 to prevent forward or backward rotation of the adjustment plug 16 so that the set pressure from being changed after the pressure of the valve is set.

In the drawing, the non-explained reference numeral 19 denotes a connection part rotatably coupled to an outer side of the plug 11 to supply the pilot signal pressure from the outside.

The use example of the pressure control valve as constructed above in the related art will be described with reference to the accompanying drawings.

A) A case where the set pressure of the relief valve is used (i.e. the pilot signal pressure from the outside is not supplied to the main piston) will be described.

Hydraulic fluid discharged from the hydraulic pump P flows into the pressure chamber 4 of the sleeve 1 through the inlet port 1a and an orifice in the poppet 2. At this time, due to a difference in sectional area between hydraulic pressure parts of the poppet 2, the poppet 2 is pressed in left direction as shown in the drawing to keep the flow path between the inlet port 1a and the through hole 1b in a closed state.

If the pressure of the hydraulic fluid supplied to the pressure chamber 4 reaches the set pressure of the pilot poppet spring 7, the pilot poppet 5 moves in right direction as shown in the drawing to open the flow path of the valve seat 6. Accordingly, the hydraulic fluid in the pressure chamber 4 is returned to the hydraulic tank T through the through hole 11b of the plug 11 and a through-hole 1c of the sleeve 1.

Simultaneously, due to the opening of the pilot poppet 5, the pressure of the hydraulic fluid in the pressure chamber 4 is instantaneously lowered. Accordingly, the poppet 2 moves in right direction as shown in the drawing, and the hydraulic fluid on the side of the inlet port 1a is returned to the hydraulic tank T through the through hole 1b.

At this time, the set pressure is determined in accordance with the spring force of the pilot poppet spring 7 set by the control of the guide 12 against the plug (i.e. the rotation clockwise or counterclockwise).

B) A case where the set pressure of the relief valve is changed (i.e. the pilot signal pressure from the outside is supplied to the main piston) will be described.

The pilot signal pressure supplied from the outside through the connection part 19 is supplied to the main piston 13 through the pilot port 11a of the plug 11 and the through hole 12a of the guide 12 in order. At this time, due to the difference in section area between hydraulic pressure parts of the main piston 13, the main piston 13 moves in right direction as shown in the drawing (at this time, the spring 15 is compressed).

That is, the spring 15 is compressed due to the movement of the main piston 13, and the spring force of the pilot poppet spring 7 for supporting the pilot poppet 5 is reduced. Accordingly, the set pressure value generated in the hydraulic pump P is reduced, and the set pressure of the pressure control valve is varied.

After the initial pressure setting, if the pilot signal pressure supplied through the connection part 19 is shifted and the main piston 13 moves in right direction as shown in the drawing (i.e. the main piston moves within the range "X"), the first stopper 10 also moves in right direction as shown in the drawing (i.e. the first stopper moves within the range "Y").

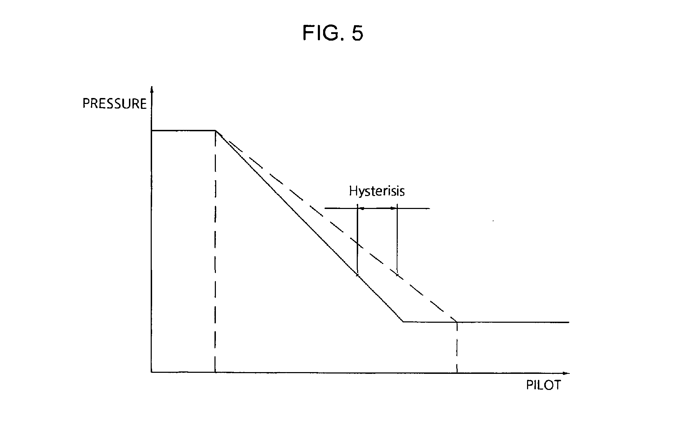

As illustrated as a dotted line in FIG. 5, when the pressure in the low-pressure section of the pressure control valve is variably adjusted by the pilot signal pressure that is supplied to the main piston 13 through the connection part 19, a hysteresis occurs, whereby the set pressure of the valve cannot be accurately controlled due to the tolerance of actual hydraulic components that constitute the pressure control valve.

In addition, in the case of setting the minimum pressure of the pressure control valve by the pilot signal pressure, the range of the minimum pressure is extended due to the tolerance of the hydraulic components, and thus it is impossible to accurately set the pressure desired by the user (e.g. in the case where the minimum pressure of the pressure control valve is 100kg/cm², the actual pressure may be set to 110kg/cm²).

EP 2 093 467 A2 describes a pressure control valve for variably controlling the set pressure of a relief valve in accordance with a pilot signal pressure that is controlled in an operator's seat when the set pressure of the relief valve required in a replaced working device is changed. The pressure control valve includes a sleeve having an inlet port and a tank path, a poppet opening/closing a flow path between the inlet port and the tank path, a poppet spring elastically supporting the path between the inlet port and the tank path in a closed state, a valve sheet installed to face the poppet so that a set pressure is formed in a pressure chamber of the sleeve, a pilot poppet draining the hydraulic fluid in the pressure chamber to the hydraulic tank when high pressure that exceeds the set pressure is generated in the pressure chamber, a pilot poppet spring elastically supporting the path of the valve sheet in a closed state, a.plug coupled to the sleeve and having a pilot port to receive the pilot signal pressure from an outside, a main piston slidably coupled within a guide coupled to the plug to variably control the set pressure in the pressure chamber in accordance with the pilot signal pressure, and a control plug movably coupled to the guide to control a set pressure of a spring supporting the main piston.

### SUMMARY OF THE INVENTION

Accordingly, it is an object of the present invention to solve the above-mentioned problems occurring in the prior art while advantages achieved by the prior art are maintained intact.

This object is achieved by a pressure control valve of claim 1.

An embodiment of the present invention relates to a pressure control valve which can accurately adjust the pressure in a low-pressure section of a relief valve by pilot signal pressure supplied through manipulation of a signal pressure generation device in an operator's seat or the like.

An embodiment of the present invention relates to a pressure control valve which can reduce a work time for variably adjusting the set pressure of the pressure control valve.

In an embodiment of the present invention, there is provided a pressure control valve, which includes a sleeve having an inlet port into which hydraulic fluid from a hydraulic pump flows, and a through hole formed thereon to communicate with a hydraulic tank; a poppet slidably coupled in the sleeve to open/close a flow path between the inlet port and the through hole; a poppet spring elastically supporting the path between the inlet port and the through hole in a closed state by pressing the poppet; a pilot poppet draining the hydraulic fluid in a pressure chamber to the hydraulic tank when high pressure that exceeds the set pressure is generated in the pressure chamber of the sleeve; a valve seat on which the pilot poppet is seated to form pressure in the pressure chamber; a pilot poppet spring elastically supporting a flow path of the valve seat in a closed state by pressing the pilot poppet; a plug coupled to the sleeve, and having a pilot port formed thereon to receive the pilot signal pressure supplied from the outside; a guide coupled to the plug, and having a through-hole formed thereon to receive a supply of the pilot signal pressure passing through the pilot port; a main piston sliding inside the guide to variably adjust the set pressure of the pressure chamber in accordance with the pilot signal pressure supplied through the through-hole of the guide; a first stopper slidably coupled to the guide to support the pilot poppet spring; a second stopper limiting the movement of the main piston within a predetermined section when the pilot signal pressure which passes through the through hole of the guide presses the main piston; an adjustment plug movably coupled to the guide to adjust the set pressure of a spring elastically supporting the main piston; and an adjustment screw movably coupled to the adjustment plug to adjust an amount of movement of the main piston by pressing the second stopper when the pilot signal pressure is supplied to the main piston so that pressure in a low-pressure section can be finely controlled.

The pressure control valve according to an embodiment of the present invention may further include a leak prevention seal mounted on an outer surface of the adjustment screw coupled to the adjustment plug to prevent the hydraulic fluid in a back pressure chamber of the guide from leaking through a gap between the adjustment plug and the adjustment screw.

The pressure control valve according to an embodiment of the present invention may further include a fastening part fixed to the adjustment screw to prevent rotation of the adjustment screw against the adjustment plug so that the pressure of the pressure control valve is prevented from being changed after the pressure is set by the adjustment of the adjustment screw.

The pressure control valve as constructed above according to an embodiment of the present invention has the following advantages.

The pressure in the low-pressure section of the relief valve can be accurately adjusted by the pilot signal pressure supplied through manipulation of the signal pressure generation device in the operator's seat or the like. In accordance with the accurate adjustment of the pressure in the low-pressure section as described above, the high pressure and intermediate pressure can also be accurately controlled to heighten the quality of the product.

Also, the work time for variably adjusting the set pressure of the pressure control valve can be reduced to heighten the competitiveness of the product.

### BRIEF DESCRIPTION OF THE DRAWINGS

The above and other objects, features and advantages of the present invention will be more apparent from the following detailed description taken in conjunction with the accompanying drawings, in which:
FIG. 1 is a sectional view of a pressure control valve in the related art;
FIG. 2 is a sectional view of a pressure control valve in a neutral state according to an embodiment of the present invention;
FIG. 3 is a sectional view of a pressure control valve according to an embodiment of the present invention explaining a high-pressure setting;
FIG. 4 is a sectional view of a pressure control valve according to an embodiment of the present invention explaining a standard pressure setting; and
FIG. 5 is a graph explaining the control of the set pressure of the pressure control valve in accordance with the control of the pilot signal pressure.

### DETAILED DESCRIPTION OF THE PREFERRED EMBODIMENTS

Hereinafter, preferred embodiments of the present invention will be described with reference to the accompanying drawings. The matters defined in the description, such as the detailed construction and elements, are nothing but specific details provided to assist those of ordinary skill in the art in a comprehensive understanding of the invention, and thus the present invention is not limited thereto.

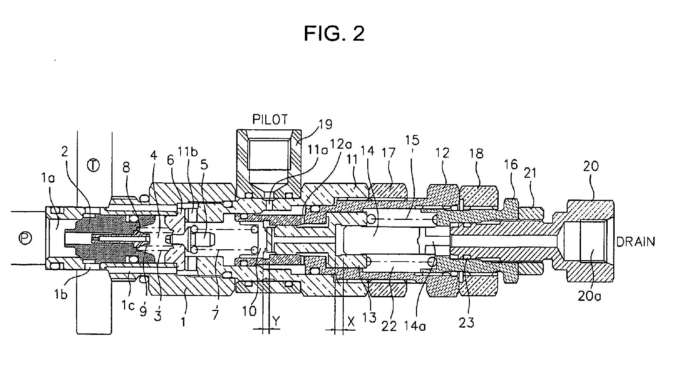

As shown in FIGS. 2 to 4, a pressure control valve according to an embodiment of the present invention includes a sleeve 1 having an inlet port 1a into which high-pressure hydraulic fluid from a hydraulic pump P flows, and a through hole 1b formed thereon to communicate with a hydraulic tank T; a poppet 2 slidably coupled in the sleeve 1 to open/close a flow path between the inlet port 1a and the through hole 1b; a poppet spring 3 elastically supporting the path between the inlet port 1a and the through hole 1b in a closed state by pressing the poppet 2; a pilot poppet 5 draining the hydraulic fluid in a pressure chamber 4 to the hydraulic tank T when high pressure that exceeds the set pressure is generated in the pressure chamber 4 of the sleeve 1; a valve seat 6 which is installed to face the poppet 2 and on which the pilot poppet 5 is seated to form pressure in the pressure chamber 4; a piston 8 sliding inside the poppet 2 by an initial pressure of the hydraulic pump P to be in contact with the pilot poppet 5; a piston spring 9 elastically supporting the piston 8; a pilot poppet spring 7 elastically supporting a flow path of the valve seat 6 in a closed state by pressing the pilot poppet 5; a plug 11 coupled to the sleeve 1, and having a pilot port 11a formed thereon to receive the pilot signal pressure supplied from the outside; a guide 12 coupled to the plug 11, and having a through-hole 12a formed thereon to receive a supply of the pilot signal pressure passing through a connection part 19 and the pilot port 11a in order; a main piston 13 sliding inside the guide 12 to variably adjust the set pressure of the pressure chamber 4 in accordance with the pilot signal pressure supplied through the pilot port 11a of the plug 11 and the through-hole 12a of the guide 12 in order; a first stopper 10 slidably coupled to the guide 12 to support the pilot poppet spring 7; a second stopper 14 limiting the movement of the main piston 13 within a predetermined section when the pilot signal pressure which passes through the pilot port 11a of the plug 11 and the through hole 12a of the guide 12 in order presses the main piston 13; an adjustment plug 16 movably coupled to the guide 12 to adjust the set pressure of a spring 15 elastically supporting the main piston 13; and an adjustment screw 20 movably coupled to the adjustment plug 16 to adjust an amount of movement of the main piston 13 by pressing the second stopper 14 when the pilot signal pressure is supplied to the main piston 13 so that pressure in a low-pressure section can be finely controlled.

The pressure control valve according to an embodiment of the present invention further includes a fastening part 21 fixed to the adjustment screw 20 to prevent the adjustment screw 20 from rotating clockwise or counterclockwise against the adjustment plug 16 so that the pressure of the pressure control valve is prevented from being changed after the pressure is set by the adjustment of the adjustment screw 20.

The pressure control valve according to an embodiment of the present invention further includes a leak prevention seal (e.g. O-ring) 23 mounted on an outer surface of the adjustment screw 20 coupled to the adjustment plug 16 to prevent the hydraulic fluid in a back pressure chamber 22 of the guide 12 from leaking through a gap between the adjustment plug 16 and the adjustment screw 20.

Here, since the construction of the pressure control valve except for the adjustment screw 20, the fastening part 21, and the leak prevention seal 23 is substantially the same as the construction of the pressure control valve in the related art as illustrated in FIG. 1, the detailed description thereof will be omitted, and the same reference numerals are given to the same constituent elements.

Hereinafter, the operation of the pressure control valve according to an embodiment of the present invention will be described with reference to the accompanying drawings.

A) A case where the set pressure of the relief valve is used (i.e. the pilot signal pressure from the outside is not supplied to the main piston) will be described. In this case, since the operation of the relief valve when overload occurs is substantially the same as the operation of the relief valve as illustrated in FIG. 1, the detailed description thereof will be omitted.

As shown in FIG. 2, the hydraulic fluid discharged from the hydraulic pump P flows into the pressure chamber 4 of the sleeve 1 through the inlet port 1a and an orifice in the poppet 2 (at this time, the poppet 2 is kept in an initial state where the poppet is seated on the sleeve 1).

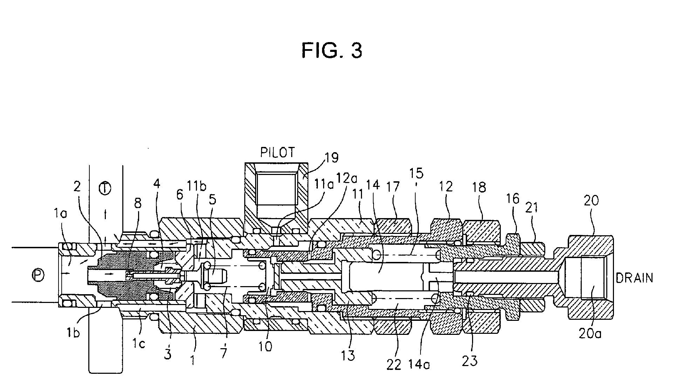

As shown in FIG. 3, if the pressure of the hydraulic fluid supplied to the pressure chamber 4 reaches the set pressure of the pilot poppet spring 7, the pilot poppet 5 moves in right direction as shown in the drawing to open the flow path of the valve seat 6 (at this time, the hydraulic fluid in the pressure chamber 4 is returned to the hydraulic tank T through the through hole 11b of the plug 11 and a through-hole 1c of the sleeve 1 in order).

Simultaneously, the pilot poppet 5 moves to an open position, and thus the pressure of the hydraulic fluid in the pressure chamber 4 is instantaneously lowered (at this time, the poppet 2 moves in right direction as shown in the drawing, and the hydraulic fluid on the side of the inlet port 1a is returned to the hydraulic tank T through the through hole 1b).

B) A case where the set pressure of the relief valve is changed (i.e. the pilot signal pressure from the outside is supplied to the main piston) will be described.

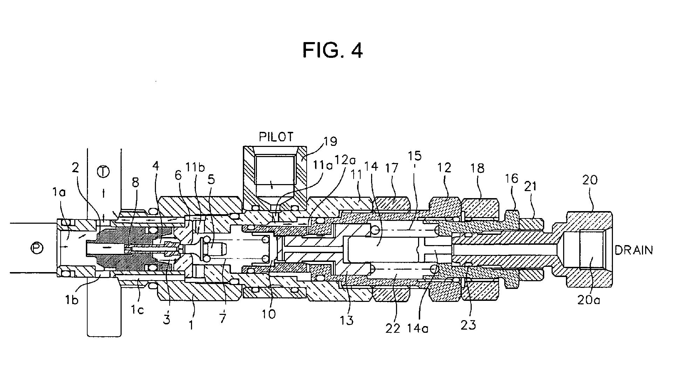

As shown in FIGs. 2 and 4, the pilot signal pressure supplied from the outside through the connection part 19 is supplied to the main piston 13 through the pilot port 11a of the plug 11 and the through hole 12a of the guide 12 in order.

Due to the difference in section area between hydraulic pressure parts of the main piston 13, the main piston 13 moves in right direction as shown in the drawing (at this time, the spring 15 is compressed). The hydraulic fluid in the back pressure chamber 22 passes through a through hole 14a of the second stopper 14, and then is drained to the hydraulic tank through a drain port 20a of the adjustment screw 20.

At this time, the leak prevention seal 23 mounted on the outer surface of the adjustment screw 20 seals a gap between the adjustment plug 16 and the adjustment screw 20, and thus the hydraulic fluid in the back pressure chamber 22 is prevented from leaking through the gap between the adjustment plug 16 and the adjustment screw 20.

If the main piston 13 moves in the right direction (i.e. the main piston moves within the range "X"), the first stopper 10 also moves in the right direction as shown in the drawing (i.e. the first stopper moves within the range "Y"). Accordingly, the spring force of the pilot poppet spring 7 that supports the pilot poppet 5 is reduced. Thus, the set pressure value generated in the hydraulic pump P is decreased, and thus the set pressure of the pressure control valve is varied.

At this time, the pressure in the standard pressure section can be adjusted to a pressure desired by a user. That is, if the main piston 13 moves in the right direction as shown in the drawing by the pilot signal pressure which is supplied from the outside through the pilot poppet 11a to finely adjust the standard pressure, the adjustment screw 20 that is movably coupled to the adjustment plug 16 is rotated in forward or backward direction.

As described above, since the second stopper 14 is pressed by adjusting the adjustment screw 20, the amount of movement of the main piston 13 can be finely adjusted. Accordingly, the pressure in the standard pressure section can be finely set to the pressure desired by the user.

Although the preferred embodiment of the present invention has been described for illustrative purposes, those skilled in the art will appreciate that various modifications, additions and substitutions are possible, without departing from the scope of the invention as disclosed in the accompanying claims.

## Claims

1. A pressure control valve comprising:
a sleeve (1) having an inlet port (1a) into which hydraulic fluid from a hydraulic pump (P) flows and a through hole (1b) formed thereon to communicate with a hydraulic tank (T);
a poppet (2) slidably coupled in the sleeve (1) to open/close a flow path between the inlet port (1a) and the through hole (1b);
a poppet spring (3) elastically supporting the path between the inlet port (1a) and the through hole (1b) in a closed state by pressing the poppet (2);
a pilot poppet (5) draining the hydraulic fluid in a pressure chamber (4) to the hydraulic tank (T) when high pressure that exceeds the set pressure is generated in the pressure chamber (4) of the sleeve (1);
a valve seat (6) on which the pilot poppet (5) is seated to form pressure in the pressure chamber (4);
a pilot poppet spring (7) elastically supporting a flow path of the valve seat (6) in a closed state by pressing the pilot poppet (5);
a plug (11) coupled to the sleeve (1), and having a pilot port (11a) formed thereon to receive the pilot signal pressure supplied from the outside;
a guide (12) coupled to the plug (11), and having a through-hole (12a) formed thereon to receive a supply of the pilot signal pressure passing through the pilot port (11a);
a main piston (13) sliding inside the guide (12) to variably adjust the set pressure of the pressure chamber (4) in accordance with the pilot signal pressure supplied through the through-hole (12a) of the guide (12);
**characterized by**
a first stopper (10) slidably coupled to the guide (12) to support the pilot poppet spring (7);
a second stopper (14) limiting the movement of the main piston (13) within a predetermined section when the pilot signal pressure which passes through the through hole (1b) of the guide (12) presses the main piston (13);
an adjustment plug (16) movably coupled to the guide (12) to adjust the set pressure of a spring (35) elastically supporting the main piston (13); and
an adjustment screw (20) movably coupled to the adjustment plug (16) to adjust an amount of movement of the main piston (13) by pressing the second stopper (14) when the pilot signal pressure is supplied to the main piston (13) so that pressure in a low-pressure section can be finely controlled.

2. The pressure control valve according to claim 1, further comprising a leak prevention seal (23) mounted on an outer surface of the adjustment screw (20) coupled to the adjustment plug (16) to prevent the hydraulic fluid in a back pressure chamber (22) of the guide (12) from leaking through a gap between the adjustment plug (16) and the adjustment screw (20).

3. The pressure control valve according to claim 1 or 2, further comprising a fastening part (21) fixed to the adjustment screw (20) to prevent rotation of the adjustment screw (20) against the adjustment plug (16) so that the pressure of the pressure control valve is prevented from being changed after the pressure is set by the adjustment of the adjustment screw (20).

## Patentansprüche

1. Ein Drucksteuerventil, das folgende Merkmale aufweist:
eine Hülse (1) mit einem Einlasstor (1a), in das Hydraulikfluid von einer Hydraulikpumpe (P) fließt, und ein Durchgangsloch (1b), das darauf gebildet ist, um mit einem Hydrauliktank (T) zu kommunizieren;
ein Tellerventil (2), das gleitbar in die Hülse (1) gekoppelt ist, um einen Flussweg zwischen dem Einlasstor (1a) und dem Durchgangsloch (1b) zu öffnen/zu schließen;
eine Tellerventilfeder (3), die den Weg zwischen dem Einlasstor (1a) und dem Durchgangsloch (1b) in einem geschlossenen Zustand durch Drücken des Tellerventils (2) elastisch trägt;
ein Pilottellerventil (5), das das Hydraulikfluid in einer Druckkammer (4) zu dem Hydrauliktank (T) entleert, wenn hoher Druck, der den Solldruck überschreitet, in der Druckkammer (4) der Hülse (1) erzeugt wird;
einen Ventilsitz (6), auf dem das Pilottellerventil (5) sitzt, um Druck in der Druckkammer (4) zu bilden;
eine Pilottellerventilfeder (7), die den Flussweg des Ventilsitzes (6) in einem geschlossenen Zustand durch Drücken des Pilottellerventils (5) elastisch trägt;
einen Stöpsel (11), der mit der Hülse (1) gekoppelt ist, und auf dem ein Pilottor (11a) gebildet ist, um den Pilotsignaldruck aufzunehmen, der von außen zugeführt wird;
eine Führung (12), die mit dem Stöpsel (11) gekoppelt ist, und auf der ein Durchgangsloch (12a) gebildet ist, um eine Zufuhr des Pilotsignaldrucks aufzunehmen, der durch das Pilottor (11a) verläuft;
ein Hauptkolben (13), der in die Führung (12) gleitet, um den Solldruck der Druckkammer (4) variabel einzustellen gemäß dem Pilotsignaldruck, der durch das Durchgangsloch (12a) der Führung (12) zugeführt wird;
**gekennzeichnet durch**
einen ersten Stopper (10), der gleitbar mit der Führung (12) gekoppelt ist, um die Pilottellerventilfeder (7) zu tragen;
einen zweiten Stopper (14), der die Bewegung des Hauptkolbens (13) innerhalb eines vorbestimmten Abschnitts begrenzt, wenn der Pilotsignaldruck, der **durch** das Durchgangsloch (1b) der Führung (12) verläuft, den Hauptkolben (13) drückt;
einen Einstellstöpsel (16), der bewegbar mit der Führung (12) gekoppelt ist, um den Solldruck einer Feder (35) einzustellen, die den Hauptkolben (13) elastisch trägt; und
eine Einstellschraube (20), die bewegbar mit dem Einstellstöpsel (16) gekoppelt ist, um einen Bewegungsbetrag des Hauptkolbens (13) einzustellen **durch** Drücken des zweiten Stoppers (14), wenn der Pilotsignaldruck dem Hauptkolben (13) zugeführt wird, so dass Druck in einem Niederdruckabschnitt fein gesteuert werden kann.

2. Das Drucksteuerventil gemäß Anspruch 1, das ferner eine Leckverhinderungsabdichtung (23) aufweist, die auf einer Außenoberfläche der Einstellschraube (20) angebracht ist, die mit dem Einstellstöpsel (16) gekoppelt ist, um zu verhindern, dass das Hydraulikfluid in einer Rückdruckkammer (22) der Führung (12) durch einen Zwischenraum zwischen dem Einstellstöpsel (16) und der Einstellschraube (20) entweicht.

3. Das Drucksteuerventil gemäß Anspruch 1 oder 2, das ferner ein Befestigungsteil (21) aufweist, das an der Einstellschraube (20) festgemacht ist, um eine Drehung der Einstellschraube (20) gegen den Einstellstöpsel (16) zu verhindern, so dass der Druck des Drucksteuerventils daran gehindert wird, sich zu ändern, nachdem der Druck durch die Einstellung der Einstellschraube (20) eingestellt ist.

## Revendications

1. Soupape de contrôle de pression, comprenant:
un manchon (1) présentant un orifice d'entrée (1a) dans lequel circule le fluide hydraulique d'une pompe hydraulique (P) et un trou traversant (1b) y formé pour communiquer avec un réservoir hydraulique (T);
un clapet (2) couplé de manière coulissante dans le manchon (1) pour ouvrir/fermer un trajet de circulation entre l'orifice d'entrée (1a) et le trou traversant (1b);
un ressort de clapet (3) supportant élastiquement le trajet entre l'orifice d'entrée (1a) et le trou traversant (1b) à l'état fermé en poussant sur le clapet (2);
un clapet pilote (5) drainant le fluide hydraulique dans la chambre à pression (4) vers le réservoir hydraulique (T) lorsqu'il est généré une haute pression qui excède la pression réglée dans la chambre à pression (4) du manchon (1);
un siège de soupape (6) sur lequel se trouve le clapet pilote (5) pour former une pression dans la chambre à pression (4);
un ressort de clapet pilote (7) supportant élastiquement un trajet de circulation du siège de soupape (6) à l'état fermé en poussant sur le clapet pilote (5);
un bouchon (11) couplé au manchon (1), et présentant un orifice pilote (11a) y formé pour recevoir la pression de signal pilote alimentée depuis l'extérieur;
un guide (12) couplé au bouchon (11), et présentant un trou traversant (12a) y formé pour recevoir une alimentation de la pression de signal pilote passant par l'orifice pilote (11a);
un piston principal (13) coulissant à l'intérieur du guide (12) pour ajuster de manière variable la pression réglée de la chambre à pression (4) selon la pression de signal pilote alimentée à travers le trou traversant (12a) du guide (12);
**caractérisé par**
un premier tampon (10) couplé de manière coulissante au guide (12) pour supporter le ressort de clapet pilote (7);
un deuxième tampon (14) limitant le déplacement du piston principal (13) dans un segment prédéterminé lorsque la pression de signal pilote qui passe à travers le trou traversant (1b) du guide (12) pousse sur le piston principal (13);
un bouchon d'ajustement (16) couplé de manière mobile au guide (12) pour ajuster la pression réglée d'un ressort (35) supportant élastiquement le piston principal (13); et
une vis d'ajustement (20) couplée de manière mobile au bouchon d'ajustement (16) pour ajuster une quantité de déplacement du piston principal (13) en poussant sur le deuxième tampon (14) lorsque la pression de signal pilote est alimentée vers le piston principal (13) de sorte que la pression dans un segment de basse pression puisse être contrôlée finement.

2. Soupape de contrôle de pression selon la revendication 1, comprenant par ailleurs un joint empêchant une fuite (23) monté sur une surface extérieure de la vis d'ajustement (20) couplée au bouchon d'ajustement (16) pour empêcher que le fluide hydraulique dans une chambre à contre-pression (22) du guide (12) ne fuie à travers un interstice entre le bouchon d'ajustement (16) et la vis d'ajustement (20).

3. Soupape de contrôle de pression selon la revendication 1 ou 2, comprenant par ailleurs une pièce de fixation (21) fixée à la vis d'ajustement (20) pour empêcher la rotation de la vis d'ajustement (20) contre le bouchon d'ajustement (16), de sorte que la pression de la soupape de contrôle de pression soit empêchée de changer après que la pression soit réglée par l'ajustement de la vis d'ajustement (20).
